# EUROPÄISCHE PATENTSCHRIFT

(11) **EP 2 025 959 B1**
(45) Veröffentlichungstag und Bekanntmachung des Hinweises auf die Patenterteilung: **12.10.2011**
(21) Anmeldenummer: 08009663.9
(22) Anmeldetag: 28.05.2008
(51) Int. Cl.: F16D 1/08

(54) **Maschinenelement für eine Welle-Nabe-Verbindung und Herstellungsverfahren für eine Welle-Nabe-Verbindung**
Machine element for a shaft-to-hub connection and production method for a shaft-to-hub connection
Elément de machines pour une liaison arbre-moyeu et procédé de fabrication d'une liaison arbre-moyeu

(30) Priorität: 17.08.2007 DE 102007038971
(43) Veröffentlichungstag der Anmeldung: 18.02.2009
(73) Patentinhaber: GM Global Technology Operations LLC, Detroit, MI 48265-3000 (US)
(72) Erfinder: Krischker, Utz, 65428 Rüsselsheim (DE)
(74) Vertreter: Kraenzmer, Martin

(56) Entgegenhaltungen:
- DE-A1- 3 900 797
- DE-A1- 10 213 214
- DE-A1- 19 945 097
- US-A- 3 076 352

## Beschreibung

Die Erfindung betrifft ein Maschinenelement für eine Welle-Nabe-Verbindung zum drehfesten Kuppeln von drehenden oder festen Maschinenelementen mit Wellen mittels einer Exzenterspannhülse, sowie ein entsprechendes Herstellungsverfahren.

Die Herstellung drehfester Verbindungen zwischen drehenden oder festen Maschinenelementen, wie beispielsweise kontinuierlich drehenden oder auch alternierend hin- und herdrehenden Wellen und darauf fest sitzenden Maschinenelementen, wie Hebeln, Riemenscheiben, Nocken, Zahnrädern und dergleichen, sind in der Vergangenheit verschiedene Anordnungen vorgeschlagen worden. Beispielsweise offenbart die DE 43 27 461 A1 eine Vorrichtung zum drehfesten Verbinden einer Welle mit einem außen sechsflächig begrenzten Maschinenteil mittels einer Exzenterspannvorrichtung. Zu dieser gehört eine geschlitzte Hülse mit einem äußeren Keilprofil, wobei die Hülse gegen das äußere Maschinenelement verdrehbar ist und sich somit zwischen der Welle und dem äußeren Maschinenelement festklemmt.

Der in der Hülse angebrachte Längsschlitz gestattet eine federnde Verformung der Hülse in Radialrichtung. Jedoch ist die Rundlaufgenauigkeit beschränkt. Ferner können insbesondere bei kleinen Wellendurchmessern durch das Verspannen so hohe Spannungen auftreten, dass das die Nabe aufweisende Maschinenelement beschädigt werden kann.

Die Dokumente DE 199 45 097 A1 und US-A-3 076 352 offenbaren ebenfalls eine Vorrichtung zum Verbinden einer Welle mit einem Maschinenteil.

Es ist die Aufgabe der Erfindung ein Maschinenelement zu schaffen, das eine einfach herstellbare, gut einsetzbare Welle-Nabe-Verbindung ermöglicht und hohe Kräfte aufnehmen kann, sowie ein Verfahren zur Herstellung einer derartigen Welle-Nabe-Verbindung zu schaffen.

Die Lösung der Aufgabe erfolgt durch ein Maschinenelement mit den Merkmalen des Anspruchs 1 sowie ein Herstellungsverfahren mit den Merkmalen des Anspruchs 11. Vorteilhafte Weiterbildungen der Erfindung sind in den Unteransprüchen angegeben.

Das erfindungsgemäße Maschinenelement für eine Welle-Nabe-Verbindung dient zum drehfesten Kuppeln von drehenden Maschinenelementen mit Wellen, wobei die drehenden Maschinenelemente beispielsweise Zahnräder, Riemenscheiben, axiale Sicherungsringe, Teile von Lageranordnungen, Teile von Dichtungsanordnungen, Hebel und dergleichen sein können. Die Drehbewegung des betreffenden Maschinenelements kann eine kontinuierliche Drehbewegung mit konstanter oder wechselnder Drehzahl, mit konstanter Drehrichtung oder auch eine hin- und herdrehende Bewegung mit wechselnder Drehrichtung sein. Die Welle kann eine Vollwelle, eine Hohlwelle oder dergleichen sein. Sie weist an ihrer Außenseite eine Sitzfläche auf, die vorzugsweise zylindrisch ausgebildet ist.

Das Maschinenelement weist einen Aufnahmeraum auf, in den ein ungeschlitztes Spannelement eingesetzt ist. Mit anderen Worten, das Spannelement weist in Längsrichtung keine radial durchgehenden Schlitze auf und ist somit in Umfangsrichtung durchgehend geschlossen. Es ist vorzugsweise in Radialrichtung elastisch komprimierbar, was beispielsweise durch Wahl einer entsprechend geringen Wandstärke des Spannelements erreichbar ist. Die Elastizität des Spannelements kann noch erhöht werden, indem es innen und/oder außen mit Längsnuten oder Schrägnuten versehen wird. Diese durchdringen das Spannelement jedoch nicht, d.h. es handelt sich nicht um Schlitze. Das Spannelement weist eine Öffnung, insbesondere eine zentrale Bohrung zur Aufnahme der Welle auf, wobei die Öffnung einen solchen Durchmesser aufweist, dass sich das Spannelement mit geringem Spiel auf die Welle aufschieben lässt. Die Elastizität des Spannelements ist so groß, dass das vorhandene Spiel im Rahmen der elastischen Verformung des Spannelements überwunden werden kann, um das Spannelement auf der Welle reibschlüssig festzusetzen. Die elastische Verformung des Spannelements wird durch Relativverdrehung des Spannelements gegen das Maschinenelement erreicht. Erfindungsgemäß weist das Maschinenelement eine zum Spannelement radial außerhalb angeordnete Stützhülse auf, über die Druckkräfte aufgenommen werden können. Das Spannelement ist insbesondere innerhalb der Stützhülse, vorzugsweise konzentrisch angeordnet. Besonders bevorzugt weist die Stützhülse eine Länge in axialer Richtung auf, die mindestens so groß wie die axiale Länge des Spannelements ist. Erfindungsgemäß weist die Stützhülse eine in axialer Richtung verlaufende Gewindebohrung auf. Dies erlaubt es das Maschinenelement über die Stützhülse mit einem weiteren Bauteil zu verbinden, ohne eine direkte Verbindung mit dem Material des Maschinenelements vorsehen zu müssen. Dies ermöglicht es für das Maschinenelement ein Material zu verwenden, das beispielsweise aufgrund seiner Sprödigkeit für eine Verbindung mit weiteren Bauteilen nicht besonders gut geeignet ist. Die erhöhte Flexibilität bei der Werkstoffauswahl ermöglicht den Einsatz kostengünstigerer Materialien.

Die von dem Spannelement auf das Maschinenelement wirkenden Kräfte können zumindest teilweise von der Stützhülse aufgenommen werden, so dass Spannungen innerhalb des Materials des Maschinenelements reduziert werden können. Dadurch kann das Maschinenelement auch für Wellen mit verhältnismäßig geringen Durchmessern verwendet werden, so dass bei der Montage der Welle-Nabe-Verbindung Werkzeuge mit kleinerer Schlüsselweite verwendet werden können. Ferner kann für das Maschinenelement ein kostengünstigeres Material verwendet werden, so dass das Maschinenelement aus Kunststoff, insbesondere einen Duromer, hergestellt werden kann, ohne dass ein Bauteilversagen zu befürchten ist. Das Maschinenelement weist insbesondere ein duroplastisches Material auf, wodurch die Haltbarkeit und Verschleißfestigkeit verbessert ist.

Vorzugsweise ist das Maschinenelement durch Giessen, insbesondere (Kunststoff-)Spritzguss hergestellt. Die Stützhülse und/oder das Spannelement kann dadurch von dem Maschinenelement umspritzt sein. Dies erleichtert die Herstellung und führt zu einer guten Verbindung mit dem Material des Maschinenelements.

Besonders bevorzugt weist die Stützhülse Durchgangsöffnungen auf, die insbesondere im Wesentlichen radial verlaufen. Dadurch wird das Gewicht reduziert ohne die Stabilität wesentlich zu beeinträchtigen. Ferner kann der Verbund zwischen der Stützhülse und dem Maschinenelement verbessert werden. Insbesondere wenn die Stützhülse von dem Maschinenelement umspritzt ist, kann das Material des Maschinenelements in die Durchgangsöffnungen eindringen und einen zusätzlich Formschluss bereit stellen, wodurch insbesondere deutlich höhere Scherkräfte übertragen werden können.

Um den Verbund der Stützhülse mit dem Maschinenelement weiter zu verbessern, kann die Konturierung der Stützhülse vergröbert sein. Hierzu kann die Stützhülse eine mittlere Rauhigkeit Rₐ von 0,1 - 50µm, insbesondere 1,0 - 50µm, vorzugsweise 3,0 - 50µm und besonders bevorzugt 10,0 - 50µm aufweisen. Zusätzlich beziehungsweise alternativ kann die Stützhülse Kerben aufweisen, wobei die Kerben insbesondere spanlos herstellbar sind durch Kaltumformen, Walzen, Prägen, Sandstrahlen oder Kugelstrahlen. Durch die unregelmäßige Oberfläche der Stützhülse kann insbesondere beim Umspritzen mit dem Material des Maschinenelements ein zusätzlicher Formschluss erreicht werden, der die Übertragung höherer Kräfte ermöglicht.

Je nach Anwendungsfall kann die Dicke der Stützhülse angepasst werden. Beispielsweise kann die Dicke einer im Wesentlichen ringzylindrischen Stützhülse vergrößert werden, um höhere Druckkräfte und Spannungen aufnehmen zu können. Besonders bevorzugt weist die Stützhülse eine Dicke auf, um in der Stützhülse mindestens eine in axialer Richtung verlaufende Gewindebohrung vorzusehen

Das Spannelement kann prinzipiell auf verschiedene Weisen in das Maschinenelement eingebracht worden sein. In einer ersten Ausführungsform wird es beispielsweise in das Maschinenelement eingepresst, so dass es dort im Presssitz gehalten ist. Das entsprechende Exzenterprofil kann in dem Maschinenelement vorgearbeitet sein. Es ist auch möglich, das Spannelement so auszubilden, dass es das Exzenterprofil in einem Schneidvorgang selbst herstellt. Durch den Presssitz ist es radial vorkomprimiert. Die gewünschte Rundlaufgenauigkeit des Maschinenelements wird nun hergestellt, indem die Bohrung des Spannelements vorzugsweise spanend bearbeitet wird. Beispielsweise wird es ausgedreht, ausgebohrt, ausgeschliffen usw. Außerdem können eine oder beide Stirnflächen des Spannelements oder des Maschinenelements, sofern sie das Maschinenelement überragen, plan bearbeitet werden. Wiederum kommen Drehen, Fräsen, Schleifen oder ähnliche Bearbeitungsvorgänge in Frage.

Bevorzugterweise wird das Spannelement in das Maschinenelement schon bei der Herstellung desselben eingebaut. Beispielsweise besteht das Maschinenelement aus einem spritzgussfähigen oder spritzpressfähigen Material, wie beispielsweise Zinkdruckguss, Aluminium, einem Thermoplast, Duroplast, Duromer oder einem sonstigen Kunststoff mit oder ohne Faserverstärkung. Bei der Herstellung des Maschinenelements kann das Spannelement in die entsprechende Form eingesetzt und von dem Material des Maschinenelements umspritzt werden. Das Spannelement hat in diesem Zustand vorzugsweise noch eine Wandstärke, die dicker als gewünscht und für den späteren Einsatz benötigt ist. Bei diesem Urformvorgang umschließt das Material des Maschinenelements das Spannelement und passt sich somit an dessen Außenform an. Das Maschinenelement bildet somit einen Aufnahmeraum für das Spannelement aus, der automatisch eine zu der Außenkontur des Spannelements passende Innenkontur aufweist.

Insbesondere weist die Außenform des Spannelements zumindest einen, vorzugsweise aber zwei oder drei Exzenterflächen auf, die als in Umfangsrichtung gekrümmte Keilflächen angesehen werden können und die gleiche Neigungsrichtung haben.

Nach dem Ausformen des Maschinenelements wird vorzugsweise das Spannelement zentrisch bearbeitet. Dies kann durch Drehen, Bohren, Schleifen oder eine andere spanende Bearbeitung erfolgen. Beispielsweise wird das Maschinenelement von dem Spannsystem einer Bearbeitungsmaschine, z.B. auch dem Futter einer Drehbank aufgenommen, wonach die zentrale Bohrung auf Maß gedreht wird. So wird automatisch der gewünschte Maßbezug zwischen einer Bezugsfläche des Maschinenelements und der zentralen Aufnahmebohrung hergestellt. Außerdem wird die gewünschte Dünnwandigkeit des Spannelements und somit seine radiale Elastizität erreicht. Ist das Maschinenelement beispielsweise eine Riemenscheibe, kann diese an ihrem Außenumfang oder auch an einer sonstigen Bezugsfläche aufgenommen werden, um die gewünschte Zentrierung der Bohrung des Spannelements zu erreichen.

An dem Spannelement und an geeigneter Stelle des Maschinenelements sind vorzugsweise ein oder mehrere Formschlussprofile vorgesehen, um Werkzeuge zur Aufbringung eines Relativspannmoments ansetzen zu können. Beispielsweise sind diese Profile ein Nabenaußenprofil und ein Spannelement-Innenprofil (z.B. ein Zwölfkant-Inbusprofil oder auch ein stirnseitiges Klauenkupplungsprofil).

Die Erfindung betrifft ferner eine Welle-Nabe-Verbindung, mit dessen Hilfe drehende Maschinenelemente mit Wellen drehfest gekuppelt werden können. Die Welle-Nabe-Verbindung weist eine Welle mit einer Sitzfläche und ein Maschinenelement auf, wobei das Maschinenelement wie vorstehend beschrieben aus- und weitergebildet sein kann. Die Welle ist an ihrer Sitzfläche über das Spannelement mit dem Maschinenelement verbunden. Die Welle-Nabe-Verbindung ist einfach herstellbar, gut einsetzbar und ermöglicht die Aufnahme von hohen Kräften.

Die Erfindung betrifft ferner ein Verfahren zur Herstellung einer Welle-Nabe-Verbindung, bei dem zunächst ein Maschinenelement bereit gestellt wird, das wie vorstehend beschrieben aus- und weitergebildet sein kann. Anschließend erfolgt eine spanende Bearbeitung des Spannelements insbesondere durch Bohren, Drehen und/oder Schleifen, zur Ausbildung der Öffnung. Danach wird eine Welle in die Öffnung eingesetzt. Schließlich wird die Welle und/oder des Spannelements relativ zum Maschinenelement verdreht, um eine drehfeste Verbindung der Welle mit dem Maschinenelement zu erreichen.

Insbesondere wird zum Herstellen der Welle-Nabe-Verbindung zwischen dem Maschinenelement und der Welle das Maschinenelement inklusive Spannelement auf die Welle aufgesteckt. Dies erfolgt bei entsprechender Festlegung des Innenmaßes des Spannelements und des Außenmaßes der Welle mit geringem Spiel und kann somit leicht von Hand geschehen. Es werden nun an das Maschinenelement und das Spannelement entsprechende Handlingsysteme oder Hebelwerkzeuge, beispielsweise in Form von Schraubenschlüsseln, angesetzt und es wird eine Relativverdrehung vorgenommen. Zwischen dem Spannelement und dem Material des Maschinenelements gibt es in der Regel eine schwache stoffschlüssige Verbindung, die bei entsprechender Glattheit der Außenfläche des Spannelements mit geringem Drehmoment überwunden werden kann. Das Spannelement wird dabei losgebrochen. Ist dies geschehen, bewirkt eine Verdrehung des Spannelements die Erzeugung einer Radialkraft, wodurch das Maschinenelement mit dem Spannelement reibschlüssig auf der Welle festgesetzt wird.

Es hat sich gezeigt, dass die so hergestellten Welle-Nabe-Verbindungen überaus dauerhaft und belastbar sind. Sie weisen eine hohe Rundlaufgenauigkeit bei geringsten Herstellkosten auf. Die Art der Verbindung ist vielseitig einsetzbar.

Weitere Einzelheiten ergeben sich aus der Beschreibung, der Zeichnung oder Unteransprüchen. Die Beschreibung beschränkt sich auf wesentliche Aspekte der Erfindung und sonstiger Gegebenheiten. Die Zeichnung ist ergänzend heranzuziehen und offenbart weitere Einzelheiten.

Es zeigen:
- Fig. 1: eine Welle-Nabe-Verbindung mit dem erfindungsgemäßen Maschinenelement in Vertikalschnittdarstellung,
- Fig. 2: eine Nabe des Maschinenelements zur Befestigung auf einer Welle in vertikal geschnittener Darstellung vor dem Ausdrehvorgang,
- Fig. 3: die Nabe nach Figur 2 in Stirnansicht,
- Fig. 4: das Spannelement der Nabe nach Figur 3 in Stirnansicht,
- Fig. 5: das Spannelement nach Figur 4 in Seitenansicht,
- Fig. 6: das Spannelement nach Figur 5 in längs geschnittener Darstellung vor dem Ausdrehvorgang,
- Fig. 7: eine Welle mit einem axialen Sicherungsring mit erfindungsgemäßer Keilspanneinrichtung in teilweise längs geschnittener Darstellung und

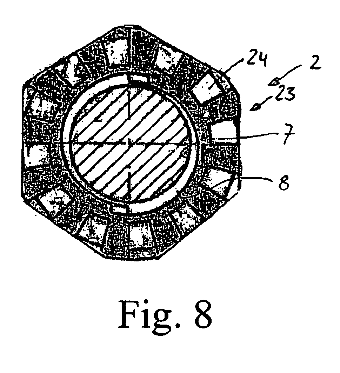

- Fig. 8: die Welle und den axialen Sicherungsring nach Figur 7, geschnitten entlang der Linie VIII-VIII.

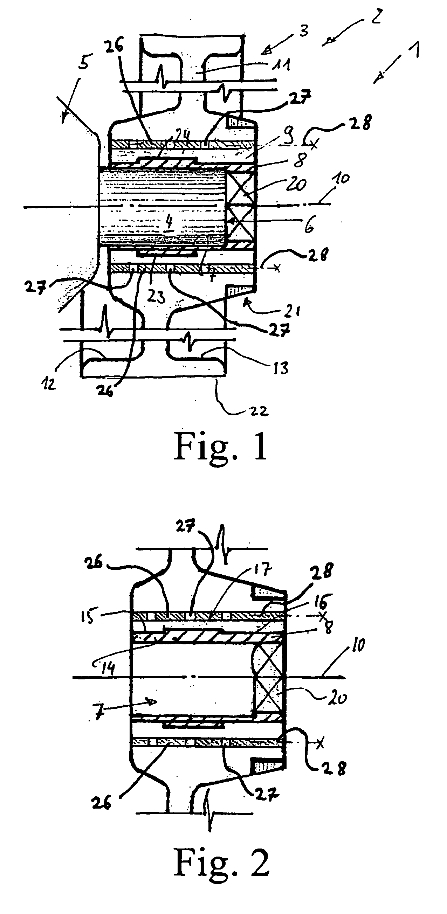

In Figur 1 ist eine Welle-Nabe-Verbindung 1 zwischen einem Maschinenelement 2 in Form einer Riemenscheibe 3 und einer Welle 4 bzw. einem Wellenstumpf veranschaulicht. Die Welle 4 dient zum Antrieb eines nicht weiter veranschaulichten Aggregats 5 eines Kraftfahrzeugs. Die Welle-Nabe-Verbindung kann aber auch an anderer Stelle zur Verbindung sonstiger Maschinenelemente und Wellen angewandt werden.

Der Wellenstumpf 4 ist im Wesentlichen zylindrisch ausgebildet. Er weist eine vorzugsweise im Wesentlichen ebene Stirnfläche 6 auf, die innerhalb einer Öffnung in Form einer Bohrung 7 eines Spannelements 8 sitzt, das in einer Nabe 9 der Riemenscheibe 3 untergebracht ist. Das Spannelement 8 und somit die Bohrung 7 sind konzentrisch zu einer Drehachse 10 orientiert, die mit der Drehachse der Welle 4 übereinstimmt.

Die Riemenscheibe 3 weist eine Stützhülse 26 auf, mit dessen Hilfe in der Riemenscheibe 3 auftretende Kräfte und Spannungen aufgenommen werden können, so dass die Riemenscheibe 3 deutlich größere von dem Spannelement ausgehende Kräfte vertragen kann als ohne Stützhülse 26. Die Stützhülse 26 ist konzentrisch zum Spannelement 8 angeordnet und radial außerhalb zum Spannelement 8 angeordnet. Im dargestellten Ausführungsbeispiel weisen die Stützhülse 26 und das Spannelement 8 eine im Wesentlichen gleiche axiale Länge auf. Die Stützhülse 26 weist mehrere Durchgangsöffnungen 27 auf, wodurch der Verbund der Stützhülse 26 mit der Riemenscheibe 3 insbesondere dann verbessert werden kann, wenn die Stützhülse 26 von der Riemenscheibe 3 umspritzt ist. In diesem Fall kann das Material der Riemenscheibe 3 in die Durchgangsöffnungen 27 fließen und die Stützhülse 26 durchdringen. Die Stützhülse weist im dargestellten Ausführungsbeispiel ferner schematisch dargestellte Gewindebohrungen 28 auf, um über die Stützhülse 26 mit der Riemenscheibe 3 weitere nicht dargestellte Bauteile einfach verbinden zu können.

Die Riemenscheibe 3 ist in ihrer Form nicht eingeschränkt. Sie kann, wie in der oberen Bildhälfte dargestellt, für schmale Riemen oder, wie in der unteren Bildhälfte von Figur 1 dargestellt, für breite flache Riemen eingerichtet sein. Mit der Nabe 9 ist der äußere Teil der Riemenscheibe 3 über einen schmalen scheibenförmigen Steg 11 verbunden. Die Nabe 9 kann, wie dargestellt, außen konisch oder alternativ auch zylindrisch oder anderweitig geformt z.B. als Zahnriemenscheibe, Zahnrad, Flachriemenscheibe, Reibrad, Nocken oder dergl. ausgebildet sein. Außerdem kann der äußere Rand der Riemenscheibe 3 im Wesentlichen zylindrische Ringflächen 12, 13 aufweisen, die zu beiden Seiten des scheibenförmigen Abschnitts 11 vorgesehen sind.

Die Riemenscheibe 3 besteht beispielsweise aus einem Kunststoff, wie beispielsweise einem duroplastischen Material, einem thermoplastischen Werkstoff oder auch einem nicht zu festen Metall, wie beispielsweise Zinkdruckguss, Aluminium, einer Aluminiumlegierung, Magnesium, einer Magnesiumlegierung oder ähnlichem. Vorzugsweise ist die Riemenscheibe 3 in einem Spritzgussverfahren oder auch in einem Spritzpressverfahren hergestellt. Letzteres insbesondere wenn faserverstärkte Kunststoffe mit hohem Faseranteil zur Anwendung kommen.

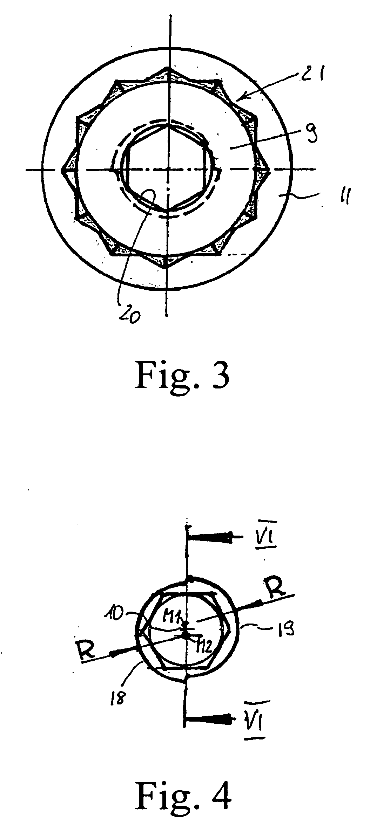

Das Spannelement 8 ist, wie Figur 2 und auch die Figuren 4 bis 6 zeigen, im Wesentlichen hülsenförmig ausgebildet. Es weist eine relativ dünne Wandung 14 auf, die die Bohrung 7 zentrisch umgibt. Z.B. besteht die Wandung 14 aus einem Metall, beispielsweise Stahl. Die Hülse 8 ist in Radialrichtung geringfügig flexibel. Dabei ist ihre Wandung 14 entlang ihres gesamten Umfangs geschlossen, d.h. es sind keine Schlitze vorgesehen. Die Elastizität ergibt sich durch Sollbiegestellen oder Sollbruchstellen oder durch die Dünnwandigkeit des Spannelements.

Das Spannelement 8 weist an seiner Außenseite zumindest eine vorzugsweise zwei im Wesentlichen zylindrische Mantelflächenabschnitte 15, 16 auf, zwischen denen ein Spannabschnitt 17 angeordnet ist. Der Spannabschnitt 17 weist ein von der Kreisform abweichendes Profil auf. Ein solches ist beispielhaft in Figur 4 veranschaulicht. Es besteht im vorliegenden Fall aus zwei zylindrisch gekrümmten Exzenterflächen 18, 19, deren Radien R sich auf Mittelpunkte M1, M2 beziehen, die jeweils einen Abstand zu der Drehachse 10 haben.

Im Anschluss an den zylindrischen Abschnitt der Bohrung 7 ist innerhalb derselben ein Formschlussprofil, beispielsweise in Form eines sechs- oder mehrflächig begrenzten Inbusabschnitts 20 vorgesehen. Das Formschlussprofil kann auch ein stirnseitiges Klauenprofil sein. Dieser dient zum Ansatz eines Inbusschlüssels, um das Spannelement 8 gegen das Maschinenelement 2 zu verdrehen.

Entsprechend ist an der Nabe 9 ein Formschlussprofil 21, beispielsweise in Form eines Zahnprofils oder eines Kerbenprofils vorgesehen, das ebenfalls zum Ansatz eines drehmomenterzeugenden Werkzeugs, wie beispielsweise eines Spannsystems oder dergleichen taugt. Der Inbusabschnitt 20 und das Formschlussprofil 21 sind aus Figur 3 gesondert ersichtlich. Diese Figur veranschaulicht die Nabe 9 und einen Teil des sie umgebenden scheibenförmigen Abschnitts 11.

Die Herstellung des Maschinenelements 2 erfolgt, am Beispiel der Riemenscheibe 3 erläutert, wie folgt:

Zur Herstellung der Riemenscheibe 3 dient eine Spritzgussform, die zentrisch eine Aufnahme für das Spannelement 8 aufweist. Dieses ist bereits mit seinem Inbusprofil oder anderem Profil versehen. Es kann außerdem die bereits fertig bearbeitete Bohrung 7 aufweisen. Bevorzugterweise hat es aber eine größere Wanddicke, d.h. die Bohrung 7 hat ein Untermaß. Die Positionierung des Spannelements 8 in der Spritzgussform erfolgt so, dass die äußeren zylindrischen Flächenabschnitte 15, 16 weitgehend koaxial zu der später gewünschten Drehachse angeordnet sind. Die Genauigkeitsanforderungen sind dabei aber nicht allzu hoch. Danach werden die Nabe 9, der Abschnitt 11 und der äußere Teil der Riemenscheibe 3 im Spritzgussverfahren hergestellt, wobei das dabei flüssige oder plastische Material das Spannelement 8 einschließt. Somit wird insbesondere der über die Flächenabschnitte 15, 16 radial nach außen vorstehende Spannabschnitt 17 beidseits von dem Material der Nabe 9 übergriffen. Das Material der Nabe 9 legt sich lückenlos an der vorzugsweise sehr glatt ausgebildeten Oberfläche der Spannhülse 8 an. An der Spannhülse 8 kann bedarfsweise ein Trennmittel in flüssiger oder pulveriger Form angebracht sein, um eine allzu innige Verbindung zwischen dem Material der Nabe 9 und der äußeren Oberfläche des Spannelements 8 zu verhindern.

Nach dem Ausformen der Riemenscheibe 3 wird die Bohrung 7 zentrisch zu der Drehachse 10 ausgebildet, wobei die Wanddicke des Spannelements 8 reduziert wird. Dies kann beispielsweise durch Ausbohren oder, wie es bevorzugt wird, durch Ausdrehen geschehen. Dazu wird die Riemenscheibe 3 an einer geeigneten Fläche, beispielsweise der Ringfläche 12 oder 13 oder auch an ihrem äußeren Rand 22 von einem Spannsystem aufgenommen. Sie wird dann zu der Drehachse 10 konzentrisch gedreht, wobei mit einem Ausdrehwerkzeug die Innenfläche der Bohrung 7 auf Maß bearbeitet wird. Dieses Maß, d.h. der so hergestellte Innendurchmesser ist so groß, dass sich die Riemenscheibe 3 mit der Bohrung 7 von Hand leicht auf die Welle 4 aufschieben lässt, ohne dabei einen zu großen Widerstand oder ein zu großes Spiel zu entwickeln.

Zur Herstellung der Welle-Nabe-Verbindung 1 wird das Spannelement 8 geringfügig gegen die Nabe 9 verdreht. Dazu wird ein Spannsystem oder Werkzeug in den Inbusabschnitt 20 und ein entsprechender Greifer auf das Formschlussprofil 21 aufgesetzt. Durch Verdrehung des Spannelements 8 gegen die Nabe 9 um einige (wenige) Grad wird zunächst eine eventuelle klebende Verbindung zwischen dem Spannelement 8 und der Riemenscheibe 8 aufgelöst, d.h. das Spannelement 8 wird losgebrochen. Es wird dann in Figur 4 in Uhrzeigerrichtung, d.h. so gedreht, dass die Exzenterflächen 8, 9 von den im Spritzgießvorgang in der Nabe 9 ausgebildeten Gegenflächen 23, 24 radial nach innen gedrängt werden. Die Zentrierung der durch das Spannelement 8 gebildeten Hülse bleibt dadurch wegen der Zentrierung der Flächenabschnitte 15, 16 erhalten. Das Spannelement 8 verformt sich elastisch, wobei sich die innere Wandung der Bohrung 7 insbesondere in dem Bereich des Spannabschnitts 17 fest an die Welle 4 anpresst, und eine drehfeste Verbindung herstellt. Auf diese Weise ist eine präzise rund laufende, einfach herzustellende und im Bedarfsfall auch wieder lösbare Welle-Nabe-Verbindung geschaffen.

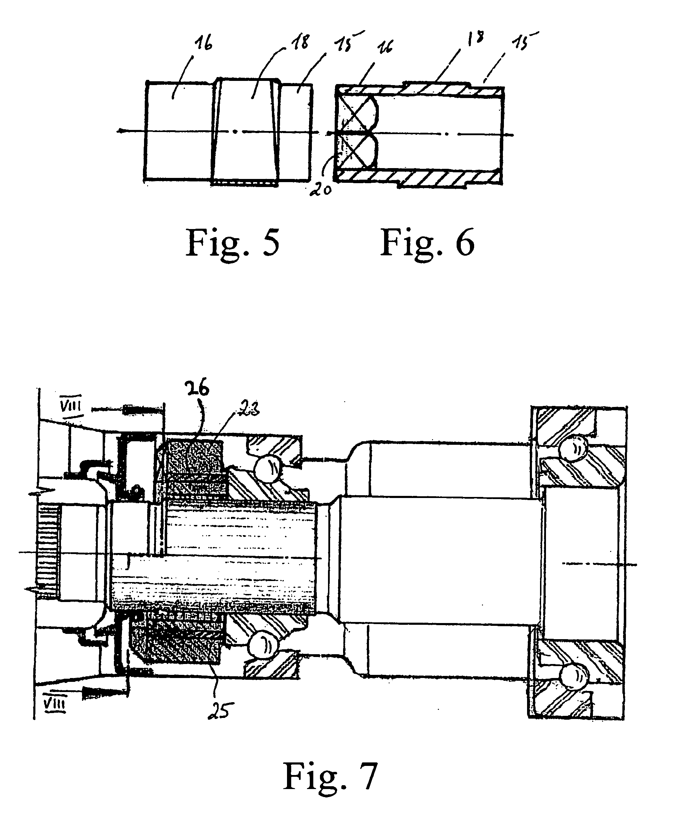

Einen abgewandelten Anwendungsfall veranschaulicht Figur 7. Die Welle-Nabe-Verbindung dient dort zur axialen Sicherung eines Sicherungsrings 23, der in der oberen Bildhälfte von Figur 7 und in der unteren Bildhälfte von Figur 7 in unterschiedlichen Varianten veranschaulicht ist. Er unterscheidet sich beispielsweise durch die axiale Länge. Der axiale Sicherungsring 23 kann an seiner Stirnseite Zähne 24 aufweisen, die dem Ansatz eines Werkzeugs dienen. Der Sicherungsring 23 kann aus einem Kunststoff oder auch einem Stahl oder einem anderen Werkstoff bestehen. Wiederum ist in eine zentrale Öffnung des hier als Sicherungsring 23 ausgebildeten Maschinenelements 2 das Spannelement 8 eingepresst, das gegen den Sicherungsring 23 verdrehbar ist, um sich dabei elastisch radial nach innen zu verformen. Das Spannelement 8 kann an seiner Stirnseite Zähne aufweisen, um gegen den Sicherungsring 24 verdreht zu werden.

Bei der Herstellung wir wiederum das Spannelement 8 in den Sicherungsring 23 eingepresst, wonach die zentrale Bohrung 7 und gegebenenfalls auch noch eine axiale Stirnfläche des Spannelements 8 und/oder eine Stirnfläche 25 des Sicherungsrings 23 feinbearbeitet werden. Durch die abschließende spanende Bearbeitung der aus dem Maschinenelement 2 und dem Spannelement 8 bestehenden Einheit wird ein präziser Rundlauf und im Falle des Sicherungsrings 23 jeder Taumelschlag der Stirnfläche 25 vermieden.

Die erfindungsgemäße Welle-Nabe-Verbindung umfasst ein Maschinenelement 2 mit einem Spannelement 8, das mit dem Maschinenelement 2 eine bauliche Einheit bildet. Das Spannelement 8 weist eine zentrale, vorzugsweise zylindrische Bohrung 7 zur Aufnahme einer Welle auf und ist so dünnwandig ausgebildet, dass es radial nach innen verformbar ist. Seine innenzylindrische Sitzfläche wird vorzugsweise erst dann erzeugt, wenn ein zur Ausbildung des Spannelements 8 vorgesehener Rohling fest in das Maschinenelement 2 eingesetzt ist. Das mit dem Spannelement 8 versehene Maschinenelement 2 besitzt eine hohe Spanngenauigkeit und ist einfach und rationell herstellbar.

### Bezugszeichenliste

- 1: Welle-Nabe-Verbindung
- 2: Maschinenelement
- 3: Riemenscheibe
- 4: Welle/Wellenstumpf
- 5: Aggregat
- 6: Stirnfläche
- 7: Öffnung/Bohrung
- 8: Spannelement
- 9: Nabe
- 10: Drehachse
- 11: Abschnitt
- 12: Ringfläche
- 13: Ringfläche
- 14: Wandung
- 15: Flächenabschnitt
- 16: Flächenabschnitt
- 17: Spannabschnitt
- 18: Exzenterfläche
- 19: Exzenterfläche
- 20: Inbusabschnitt
- 21: Formschlussprofil (Konterprofil)
- 22: Rand
- 23: Sicherungsring
- 24: Zähne
- 25: Stirnfläche
- 26: Stützhülse
- 27: Durchgangsöffnung
- 28: Gewindebohrung

- R: Radien
- M1: Mittelpunkt
- M2: Mittelpunkt

## Patentansprüche

1. Maschinenelement für eine Welle-Nabe-Verbindung (1), umfassend
einen Aufnahmeraum,
ein in den Aufnahmeraum eingesetztes, ungeschlitztes Spannelement (8), das eine Öffnung (7) zur Aufnahme einer Welle (4) aufweist und gegen das Maschinenelement (2) verdrehbar ist, **dadurch gekennzeichnet, dass**
eine zum Spannelement (8) radial außerhalb angeordnete Stützhülse (26) vorgesehen ist, wobei
die Stützhülse (26) mindestens eine in axialer Richtung verlaufende Gewindebohrung (28) aufweist.

2. Maschinenelement nach Anspruch 1
**dadurch gekennzeichnet, dass** das Maschinenelement (2) durch Giessen, insbesondere Kunststoffspritzguss hergestellt ist und die Stützhülse (26) und/oder das Spannelement (8) von dem Maschinenelement (2) umspritzt ist.

3. Maschinenelement nach Anspruch 1 oder 2
**dadurch gekennzeichnet, dass** das Maschinenelement (2) ein Duromer und/oder ein duroplastisches Material aufweist.

4. Maschinenelement nach einem der Ansprüche 1 bis 3
**dadurch gekennzeichnet, dass** die Stützhülse (26) Durchgangsöffnungen (27) aufweist.

5. Maschinenelement nach einem der Ansprüche 1 bis 4
**dadurch gekennzeichnet, dass** die Stützhülse (26) eine mittlere Rauhigkeit Rₐ von 0,1 - 50µm, insbesondere 1,0 - 50µm, vorzugsweise 3,0 - 50µm und besonders bevorzugt 10,0 - 50µm aufweist.

6. Maschinenelement nach einem der Ansprüche 1 bis 5
**dadurch gekennzeichnet, dass** die Stützhülse (26) Kerben aufweist, wobei die Kerben insbesondere spanlos herstellbar sind durch Kaltumformen, Walzen, Prägen, Sandstrahlen oder Kugelstrahlen.

7. Maschinenelement nach einem der Ansprüche 1 bis 6
**dadurch gekennzeichnet, dass** das Spannelement (8) in radialer Richtung elastisch komprimierbar ist.

8. Maschinenelement nach einem der Ansprüche 1 bis 6,
**dadurch gekennzeichnet, dass** das Spannelement (8) an seiner Außenseite eine Keilprofilierung (17) aufweist.

9. Maschinenelement nach einem der Ansprüche 1 bis 8,
**dadurch gekennzeichnet, dass** an dem Maschinenelement (2) oder seiner Nabe (9) und an dem Spannelement (8) jeweils ein Formschlussprofil (20, 21) zum Ansatz eines Spannwerkzeugs ausgebildet ist, um das Spannelement (8) und das Maschinenelement (2) durch Relativverdrehung auf der Welle (4) fest zu spannen.

10. Welle-Nabe-Verbindung zum drehfesten Kuppeln von drehenden Maschinenelementen (2) mit Wellen (4), umfassend eine Welle (4) mit einer Sitzfläche und ein Maschinenelement (2) nach einem der Ansprüche 1 bis 9, wobei die Welle (4) an Ihrer Sitzfläche über das Spannelement (8) mit dem Maschinenelement (2) verbunden ist.

11. Verfahren zur Herstellung einer Welle-Nabe-Verbindung (1) mit den Schritten:
Bereitstellen eines Maschinenelements (2) nach einem der Ansprüche 1 bis 9,
spanende Bearbeitung des Spannelements (8), insbesondere durch Bohren, Drehen und/oder Schleifen, zur Ausbildung der Öffnung (7),
Einsetzen einer Welle (4) in die Öffnung (7) und
Verdrehen der Welle (4) und/oder des Spannelements (8) relativ zum Maschinenelement (2) zum drehfesten Verbinden der Welle (4) mit dem Maschinenelement (2).

## Claims

1. A machine element for a shaft-hub connection (1), comprising a receptacle chamber,
an un-slotted clamping element (8), which is inserted into the receptacle chamber, and which has an opening (7) for receiving a shaft (4) and is pivotable in relation to the machine element (2),
**characterized in that** a support sleeve (26), which is situated radially outside the clamping element (8), is provided, the support sleeve (26) having at least one threaded hole (28) running in the axial direction.

2. The machine element according to Claim 1,
**characterized in that** the machine element (2) is produced by casting, in particular plastic injection molding, and the support sleeve (26) and/or the clamping element (8) are embedded in the machine element (2).

3. The machine element according to Claim 1 or 2,
**characterized in that** the machine element (2) comprises a duromer and/or a duroplastic material.

4. The machine element according to one of Claims 1 to 3,
**characterized in that** the support sleeve (26) has passage openings (27).

5. The machine element according to one of Claims 1 to 4,
**characterized in that** the support sleeve (26) has a mean roughness Rₐ of 0.1 - 50 µm, in particular 1.0 - 50 µm, preferably 3.0 - 50 µm, and particularly preferably 10.0 - 50 µm.

6. The machine element according to one of Claims 1 to 5,
**characterized in that** the support sleeve (26) has notches, the notches being producible without chips in particular, by cold shaping, rolling, embossing, sandblasting, or shot blasting.

7. The machine element according to one of Claims 1 to 6,
**characterized in that** the clamping element (8) is elastically compressible in the radial direction.

8. The machine element according to one of Claims 1 to 6,
**characterized in that** the clamping element (8) has a wedge profile (17) on its outer side.

9. The machine element according to one of Claims 1 to 8,
**characterized in that** a formfitting profile (20, 21) for applying a clamping tool is formed in each case on the machine element (2) or its hub (9) and on the clamping element (8), in order to clamp the clamping element (8) and the machine element (2) tightly by relative pivoting on the shaft (4).

10. A shaft-hub connection for the rotationally-fixed coupling of rotating machine elements (2) to shafts (4), comprising a shaft (4) having a seat surface and a machine element (2) according to one of Claims 1 to 9, wherein the shaft (4) is connected on its seat surface via the clamping element (8) to the machine element (2).

11. A method for producing a shaft-hub connection (1) having the following steps:
providing a machine element (2) according to one of Claims 1 to 9,
machining the clamping element (8), in particular by drilling, turning, and/or grinding, to form the opening (7),
inserting a shaft (4) into the opening (7), and
pivoting the shaft (4) and/or the clamping element (8) relative to the machine element (2) for the rotationally-fixed connection of the shaft (4) to the machine element (2).

## Revendications

1. Élément de machine pour un assemblage d'arbre et de moyeu (1), comprenant
un logement,
un élément de serrage (8) non fendu introduit dans le logement, qui présente une ouverture (7) pour loger un arbre (4) et qui peut tourner vers l'élément de machine (2),
**caractérisé en ce qu'**il est prévu une bague d'appui (26) disposée sur l'extérieur dans le sens radial par rapport à l'élément de serrage (8),
la bague d'appui (26) présentant au moins un alésage fileté (28) orienté dans le sens axial.

2. Élément de machine selon la revendication 1, **caractérisé en ce que** l'élément de machine (2) est fabriqué par moulage, en particulier par moulage par injection de matière plastique, et la bague d'appui (26) et/ou l'élément de serrage (8) sont entourés par l'élément de machine (2) lors de l'injection.

3. Élément de machine selon la revendication 1 ou 2, **caractérisé en ce que** l'élément de machine (2) comporte un duromère et/ou un plastique thermodurci.

4. Élément de machine selon l'une des revendications 1 à 3, **caractérisé en ce que** la bague d'appui (26) présente des ouvertures de passage (27).

5. Élément de machine selon l'une des revendications 1 à 4, **caractérisé en ce que** la bague d'appui (26) présente une rugosité moyenne Rₐ de 0,1 à 50 µm, en particulier de 1,0 à 50 µm, de préférence de 3,0 à 50 µm et en particulier de 10,0 à 50 µm.

6. Élément de machine selon l'une des revendications 1 à 5, **caractérisé en ce que** la bague d'appui (26) présente des encoches, lesquelles encoches peuvent en particulier être produites sans enlèvement de matière par formage à froid, laminage, emboutissage, sablage ou grenaillage.

7. Élément de machine selon l'une des revendications 1 à 6, **caractérisé en ce que** l'élément de serrage (8) est compressible de façon élastique dans le sens radial.

8. Élément de machine selon l'une des revendications 1 à 6, **caractérisé en ce que** l'élément de serrage (8) présente sur sa face extérieure un profilage en coin (17).

9. Élément de machine selon l'une des revendications 1 à 8, **caractérisé en ce qu'**est formé sur l'élément de machine (2) ou son moyeu (9) et sur l'élément de serrage (8) un profil d'engagement positif (20, 21) pour l'application d'un outil de serrage servant à serrer l'élément de serrage (8) et l'élément de machine (2) par rotation relative sur l'arbre (4).

10. Assemblage d'arbre et de moyeu pour l'accouplement solidaire en rotation d'éléments de machine (2) en rotation avec des arbres (4), comprenant un arbre (4) avec une surface de calage et un élément de machine (2) selon l'une des revendications 1 à 9, dans lequel l'arbre (4) est relié à l'élément de machine (2) sur sa surface de calage par l'intermédiaire de l'élément de serrage (8).

11. Procédé pour la fabrication d'un assemblage d'arbre et de moyeu (1) comprenant les étapes de :
préparation d'un élément de machine (2) selon l'une des revendications 1 à 9,
usinage de l'élément de serrage (8), en particulier par perçage, tournage et/ou meulage, pour former l'ouverture (7),
introduction d'un arbre (4) dans l'ouverture (7) et rotation de l'arbre (4) et/ou de l'élément de serrage (8) par rapport à l'élément de machine (2) pour assembler l'arbre (4) à l'élément de machine (2) de manière solidaire en rotation.
